(19) **Europäisches Patentamt / European Patent Office / Office européen des brevets**

(11) **EP 4 693 491 A1**

(12) **EUROPEAN PATENT APPLICATION**
published in accordance with Art. 153(4) EPC

(43) Date of publication:
**11.02.2026  Bulletin 2026/07**

(21) Application number: 24781096.3

(22) Date of filing: **19.03.2024**

(51) International Patent Classification (IPC):
**H01M 4/525** (2010.01)          **H01M 4/505** (2010.01)
**H01M 4/36** (2006.01)            **C01G 53/00** (2025.01)
**H01M 4/131** (2010.01)          **H01M 10/052** (2010.01)
**H01M 4/02** (2006.01)

(52) Cooperative Patent Classification (CPC):
**C01G 53/00; H01M 4/02; H01M 4/131; H01M 4/36;
H01M 4/505; H01M 4/525; H01M 10/052;
Y02E 60/10**

(86) International application number:
**PCT/KR2024/003436**

(87) International publication number:
**WO 2024/205105 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **31.03.2023  KR 20230043130**

(71) Applicants:
• **POSCO Holdings Inc.**
  **Pohang-si, Gyeongsangbuk-do 37859 (KR)**
• **Research Institute of Industrial Science &
  Technology**
  **Pohang-si, Gyeongsangbuk-do 37673 (KR)**

(72) Inventors:
• **HONG, Ki Joo**
  **Incheon 21986 (KR)**

• **LEE, Jiho**
  **Incheon 22008 (KR)**
• **KIM, Ju Seong**
  **Seoul 07542 (KR)**
• **JUNG, Yongjo**
  **Incheon 22002 (KR)**
• **KIM, Yong-Il**
  **Incheon 22003 (KR)**
• **NAM, Sang Cheol**
  **Seoul 02587 (KR)**
• **PARK, Jong Il**
  **Pohang-si, Gyeongsangbuk-do 37680 (KR)**

(74) Representative: **Pfenning, Meinig & Partner mbB
Patent- und Rechtsanwälte
Theresienhöhe 11a
80339 München (DE)**

(54) **CATHODE ACTIVE MATERIAL FOR LITHIUM SECONDARY BATTERY, METHOD FOR PREPARING SAME, AND LITHIUM SECONDARY BATTERY COMPRISING SAME**

(57)     The present invention relates to a positive electrode active material for a lithium secondary battery, which is a nickel-containing layered lithium transition metal oxide, wherein the positive electrode active material has an average particle diameter (D50) from 5 to 8 μm, comprises single particles consisting of one primary particle and quasi-single particles having a spherical shape consisting of a plurality of primary particles, and satisfies the following Equation 1:

[Equation 1]

$$1.2\ \mu m \leq D50 - D50p \leq 1.8\ \mu m$$

wherein D50 is the average particle diameter (D50) of the positive electrode active material before application of a pressure of 9 tons, and D50p is the average particle diameter (D50) of the positive electrode active material after application of a pressure of 9 tons.

**(Cont. next page)**

EP 4 693 491 A1

[Fig. 1]

**Description**

**[Technical Field]**

The present invention relates to a positive electrode active material for a lithium secondary battery, a method for manufacturing the same, and a lithium secondary battery including the same, and more particularly, to a single-particle type positive electrode active material for a lithium secondary battery, a method for manufacturing the same, and a lithium secondary battery including the same.

**[Background]**

With the expansion of electric vehicle adoption to achieve carbon neutrality and the surging demand for energy storage devices such as ESS for renewable energy utilization, lithium-ion batteries have become indispensable, core energy storage devices. In particular, the performance of lithium-ion batteries is greatly influenced by the positive electrode active material, and research on positive electrode materials occupies the most significant portion of lithium-ion battery research.

Among positive electrode materials, research has been actively conducted on NCM positive electrode materials in which cobalt and manganese are substituted into nickel-based layered positive electrode active materials. Conventionally, secondary particle active materials, in which primary particles are aggregated, have been extensively studied. However, such secondary particle active materials have a large specific surface area and low particle strength, resulting in problems such as life deterioration due to cracking and gas generation. Accordingly, development has been directed toward single-particle positive electrode materials consisting of one primary particle, mainly produced as small-particle positive electrode materials having an average particle diameter of about 3 to 5 $\mu$m in bimodal positive electrode materials.

Such small-particle single particles exhibit excellent mechanical particle strength characteristics, thereby achieving superior lifespan and stability. However, due to their small particle size, the rolling density is low, resulting in a limitation in increasing the energy density of the electrode.

To address this issue, attempts have been made to increase the particle diameter of single particles to enhance the electrode energy density. However, when the particle diameter of single particles is increased indiscriminately, the migration path of lithium ions becomes longer, which leads to deterioration in electrochemical properties related to lithium diffusion (such as capacity, charge/discharge efficiency, and output characteristics).

**[Detailed Description of the Invention]**

**[Technical Problem]**

An object of the present invention is to provide a single-particle type positive electrode active material for a lithium secondary battery, a method for manufacturing the same, and a lithium secondary battery including the same, which exhibit excellent rolling density, thereby improving electrode energy density, and which not only provide favorable capacity and charge/discharge efficiency characteristics but also possess excellent strength, thereby improving the lifespan characteristics of the battery.

**[Technical Solution]**

In one embodiment of the present invention, there is provided a positive electrode active material for a lithium secondary battery, which is a nickel-containing layered lithium transition metal oxide, wherein the positive electrode active material has an average particle diameter (D50) from 5 to 8 $\mu$m, comprises single particles consisting of one primary particle and quasi-single particles having a spherical shape consisting of a plurality of primary particles, and satisfies the following Equation 1:

$$[\text{Equation 1}]$$

$$1.2 \ \mu m \leq D50 - D50p \leq 1.8 \ \mu m$$

wherein D50 is the average particle diameter (D50) of the positive electrode active material before application of a pressure of 9 tons, and D50p is the average particle diameter (D50) of the positive electrode active material after application of a pressure of 9 tons.

An average number of primary particles contained in the quasi-single particle may be 8 or less.

An average aspect ratio of the primary particles contained in the quasi-single particle may be 1.1 or more.

The positive electrode active material for a lithium secondary battery may have a compaction density of 3.61 g/cc or more after application of a pressure of 9 tons.

The positive electrode active material for a lithium secondary battery may have a BET specific surface area of 0.55 m$^2$/g or less.

The lithium transition metal oxide may further comprise a grain growth promoting element selected from Zr, Al, B, or a combination thereof.

The content of the grain growth promoting element may be from 0.1 mol% to 1 mol% based on the total moles of transition metals.

The positive electrode active material may further comprise a coating layer formed on the lithium transition metal oxide, the coating layer comprising Co, Al, or a combination thereof. The lithium transition metal oxide may be represented by the following Chemical Formula 1:

$$[\text{Chemical Formula 1}] \qquad \text{Li}_a[\text{Ni}_x\text{Co}_\gamma\text{Mnz}M_1w_1M_2w_2]\text{O}_2$$

wherein $0.8 \leq a \leq 1.2$, $0.60 \leq x < 1$, $0 \leq y \leq 0.4$, $0 \leq z \leq 0.4$, $0 \leq w_1 \leq 0.01$, $0 \leq w_2 \leq 0.2$, and $x + y + z + w_1 + w_2 = 1$, $M_1$ is Zr, Al, B, or a combination thereof, and $M_2$ is Y, Mg, Ti, Nb, W, Sc, Si, V, Fe, Y, Mo, Ce, Hf, Ta, La, Sr, or a combination thereof.

In another embodiment of the present invention, there is provided a method for manufacturing a positive electrode active material for a lithium secondary battery, comprising: preparing a nickel-containing transition metal precursor; forming a mixture comprising the transition metal precursor and a lithium raw material and subjecting the mixture to a primary calcination to form a lithium transition metal oxide in which the number of primary particles is grown; subjecting the lithium transition metal oxide to a secondary calcination; and pulverizing the secondary-calcined lithium transition metal oxide to form a lithium transition metal oxide comprising single particles consisting of one primary particle and quasi-single particles having a spherical shape consisting of a plurality of primary particles, wherein the primary calcination is performed at a higher temperature and for a shorter time than the secondary calcination.

The transition metal precursor prepared in the step of preparing the transition metal precursor, or the lithium transition metal oxide formed in the step of forming a lithium transition metal oxide by primary calcination, may further comprise a grain growth promoting element selected from Zr, Al, B, or a combination thereof.

The content of the grain growth promoting element may be from 0.1 mol% to 1 mol% based on the total moles of transition metals in the transition metal precursor or the lithium transition metal oxide.

In still another embodiment of the present invention, there is provided a positive electrode for a lithium secondary battery comprising the aforementioned positive electrode active material. In yet another embodiment of the present invention, there is provided a lithium secondary battery comprising the positive electrode.

**[Advantageous Effects of the Invention]**

In one embodiment of the present invention, the positive electrode active material for a lithium secondary battery has a larger average particle diameter range than conventional small-particle single particles, thereby enabling improvement in electrode energy density. Furthermore, since it comprises not only single particles consisting of one primary particle but also quasi-single particles consisting of a plurality of primary particles, and satisfies Equation 1 described above, the capacity, charge/discharge efficiency, and lifespan characteristics of the battery can be simultaneously improved.

**[Brief Description of Drawings]**

FIG. 1 is an SEM image of a positive electrode active material for a lithium secondary battery prepared according to Example 1.

FIG. 2 is an SEM image of a positive electrode active material for a lithium secondary battery prepared according to Example 2.

FIG. 3 is an SEM image of a positive electrode active material for a lithium secondary battery prepared according to Example 3.

FIG. 4 is an SEM image of a positive electrode active material for a lithium secondary battery prepared according to Example 4.

FIG. 5 is an SEM image of a positive electrode active material for a lithium secondary battery prepared according to Comparative Example 1.

FIG. 6 is an SEM image of a positive electrode active material for a lithium secondary battery prepared according to Comparative Example 2.

FIG. 7 is an SEM image of a positive electrode active material for a lithium secondary battery prepared according to Comparative Example 3.

FIG. 8 is an SEM image of a positive electrode active material for a lithium secondary battery prepared according to Comparative Example 4.

FIG. 9 is an SEM image of a positive electrode active material for a lithium secondary battery prepared according to Comparative Example 5.

FIG. 10 is an SEM image of a positive electrode active material for a lithium secondary battery prepared according to Comparative Example 6.

**[Mode for Carrying Out the Invention]**

The terms such as first, second, and third are used to describe various portions, components, regions, layers, and/or sections, but are not limited thereto. These terms are merely used to distinguish one portion, component, region, layer, or section from another portion, component, region, layer, or section. Therefore, a first portion, component, region, layer, or section described below may be referred to as a second portion, component, region, layer, or section within the scope of the present invention.

The technical terms used herein are intended merely for describing particular embodiments and are not intended to limit the present invention. Singular forms used herein are intended to include plural forms as well, unless the context clearly indicates otherwise. The term "comprising" as used in the specification specifies the presence of stated features, regions, integers, steps, operations, elements, and/or components, but does not preclude the presence or addition of one or more other features, regions, integers, steps, operations, elements, and/or components.

When a part is referred to as being "on" or "above" another part, it may be directly on or above the other part, or intervening parts may be present therebetween. In contrast, when a part is referred to as being "directly on" or "directly above" another part, there are no intervening parts present therebetween.

Unless otherwise defined, all technical and scientific terms used herein have the same meaning as commonly understood by one of ordinary skill in the art to which the present invention pertains. Terms defined in commonly used dictionaries shall be interpreted as having a meaning consistent with the relevant technical literature and the present disclosure, and unless otherwise defined, shall not be interpreted in an idealized or overly formal sense.

Unless otherwise specified, "%" refers to weight percent (wt%), and 1 ppm refers to 0.0001 wt%.

In the present specification, the phrase "a combination(s) thereof" in a Markush expression refers to a mixture or combination of one or more components selected from the group consisting of components recited in the Markush expression, and indicates that one or more components selected from the group are encompassed.

Hereinafter, embodiments of the present invention will be described in detail to enable those skilled in the art to readily practice the invention. However, the present invention may be embodied in various different forms and is not limited to the embodiments described herein.

**1. Positive Electrode Active Material**

In one embodiment of the present invention, there is provided a positive electrode active material for a lithium secondary battery, which is a nickel-containing layered lithium transition metal oxide, wherein the positive electrode active material has an average particle diameter (D50) from 5 to 8 $\mu$m, comprises single particles consisting of one primary particle and quasi-single particles having a spherical shape consisting of a plurality of primary particles, and satisfies the following Equation 1:

[Equation 1]

$$1.2 \ \mu m \leq D50 - D50p \leq 1.8 \ \mu m$$

wherein D50 is the average particle diameter (D50) of the positive electrode active material before application of a pressure of 9 tons, and D50p is the average particle diameter (D50) of the positive electrode active material after application of a pressure of 9 tons.

The positive electrode active material for a lithium secondary battery according to one embodiment of the present invention is composed of single-particle type particles. As used herein, the term "single-particle type" is employed to distinguish from secondary particle type positive electrode active material particles, which are conventionally and generally used and formed by aggregation of several tens to several hundreds of primary particles, and refers to a concept including single particles consisting of one primary particle and agglomerated particles consisting of 30 or fewer primary particles. The term "secondary particle" refers to an aggregate, i.e., a secondary structure, in which primary particles are agglomerated through physical or chemical bonding without an intentional agglomeration or assembly process.

The term "primary particle" refers to a minimum particle unit distinguishable as a single mass when observing a cross-section of the positive electrode active material with a scanning electron microscope (SEM), and may consist of a single crystallite or a plurality of crystallites.

Since the positive electrode active material for a lithium secondary battery according to one embodiment of the present invention is composed of single-particle type particles, the particle strength is enhanced, thereby suppressing particle breakage during rolling, preventing the occurrence of cracks between primary particles upon repeated charging and discharging, and reducing gas generation due to side reactions with the electrolyte owing to the small specific surface area.

The positive electrode active material for a lithium secondary battery according to one embodiment of the present invention has an average particle diameter (D50) from 5 to 8 $\mu$m, and more specifically, from 5.2 to 8 $\mu$m, from 5.5 to 8 $\mu$m, or from 6 to 8 $\mu$m. As used herein, the average particle diameter (D50) can be defined as the particle diameter corresponding to 50% of the cumulative volume in a particle size distribution curve. The average particle diameter (D50) may be measured, for example, by a laser diffraction method. The laser diffraction method generally enables measurement of particle diameters ranging from the submicron region to several millimeters and provides results with high reproducibility and high resolution.

Since the average particle diameter of the positive electrode active material is sufficiently large within the above range, the tap density can be further improved compared with conventional small-particle single particles, thereby significantly improving the energy density of the electrode. However, if the average particle diameter is excessively large, the migration path of lithium ions becomes longer, which may deteriorate electrochemical properties such as capacity and output, and thus, the upper limit is set as described above.

However, when the average particle diameter (D50) is increased within the above range using only single particles consisting of one primary particle, the lithium ion migration path inside the particle becomes longer, resulting in deterioration of electrochemical properties such as capacity and charge/discharge efficiency. Accordingly, the positive electrode active material for a lithium secondary battery according to one embodiment of the present invention comprises both single particles consisting of one primary particle and quasi-single particles consisting of a plurality of primary particles. As used herein, the term "single particle" refers to a single-particle type particle consisting of one primary particle, and the term "quasi-single particle" refers to a single-particle type particle consisting of a plurality of primary particles. By including not only single particles but also quasi-single particles, deterioration of electrochemical properties as mentioned above can be minimized, while further maximizing rolling density. As used herein, the spherical shape does not necessarily mean a perfect sphere, but also encompasses pseudo-spherical shapes.

In addition, the positive electrode active material for a lithium secondary battery according to one embodiment of the present invention satisfies the following Equation 1:

[Equation 1]

$$1.2 \ \mu m \leq D50 - D50p \leq 1.8 \ \mu m$$

wherein D50 is the average particle diameter (D50) of the positive electrode active material before application of a pressure of 9 tons, and D50p is the average particle diameter (D50) of the positive electrode active material after application of a pressure of 9 tons.

If the value of Equation 1 is too small, the particle strength is excellent but the capacity and charge/discharge efficiency characteristics may deteriorate. If the value of Equation 1 is too large, the particle strength becomes inferior, resulting in deterioration of lifespan characteristics.

At this time, the average number of primary particles contained in the quasi-single particle consisting of a plurality of primary particles may be 8 or less, and more specifically from 2 to 8, or from 3 to 8. As used herein, the "average number of primary particles in a quasi-single particle" may be determined by acquiring SEM (scanning electron microscope) images at 5,000$\times$ magnification for a 25 $\mu$m $\times$ 20 $\mu$m two-dimensional image at five points per sample, and then deriving an arithmetic mean value of the number of primary particles visually observed for at least five random single particles at each point. It should be noted that the "average number of primary particles in a quasi-single particle" refers to the average number of primary particles observed in 2D SEM images, rather than the actual average number of primary particles included in the three-dimensional reality of the particle.

If the average number of primary particles in a quasi-single particle is too high, the porosity formed between the primary particles proportionally increases, and particle breakage may occur during the rolling process or charge/discharge cycles due to repeated contraction and expansion of primary particles having different orientations. That is, the particle strength may deteriorate, resulting in degradation of lifespan characteristics. Conversely, if the average number of primary particles in a quasi-single particle is too low, it becomes similar to a single particle, which increases the lithium ion diffusion distance within the particle, thereby deteriorating capacity and charge/discharge efficiency characteristics.

In addition, the average aspect ratio of the primary particles contained in the quasi-single particle may be 1.1 or more, and more specifically, from 1.1 to 2.5. As used herein, the "aspect ratio" may be defined as a ratio of the longest length to the shortest length of a particle, and the "average aspect ratio" may be defined as an arithmetic mean value of aspect ratios obtained by measuring the longest and shortest lengths of at least 10 particles using software during SEM image measurement for particle shape analysis. The reason why the average aspect ratio of the primary particles is 1.1 or more, such that the shape of the primary particle is closer to a rod-like shape than a perfect sphere, is that surface energy varies depending on the crystal plane, and the crystal tends to grow in the thermodynamically stable (003) plane direction. While a higher aspect ratio has the advantage of increasing particle strength, if the average aspect ratio of the primary particles is excessively high, the lithium diffusion distance increases, which may cause deterioration of capacity and efficiency.

The value of Equation 1 can be more readily achieved within the target range of the present invention when the positive electrode active material is a single-particle type material including both single particles and quasi-single particles, and when the average number of primary particles in the quasi-single particles and the average aspect ratio of the primary particles in the quasi-single particles are appropriately controlled.

The positive electrode active material for a lithium secondary battery may have a compaction density of 3.61 g/cc or more after application of a pressure of 9 tons. This property corresponds to the rolling density of the active material during electrode manufacturing, and having such a high compaction density allows improvement in electrode energy density.

As used herein, the compaction density of the active material after application of a pressure of 9 tons may be measured by loading 3 g of an active material sample into a pellet having a diameter of 13 mm, applying a pressure of 9 tons using a hydraulic press machine manufactured by Carver, and then measuring the change in height of the pellet before and after the pressure application. The specific calculation formula is as follows:

Density after application of 9 tons = Weight of active material sample (3 g) / ($\pi \times$ (1.3 cm /2)$^2 \times$ (change in height before and after pressure application))    [Calculation Formula 1]

where $\pi$ denotes the circumference ratio.

The positive electrode active material for a lithium secondary battery may have a BET specific surface area of 0.55 m$^2$/g or less. When the specific surface area of the active material is sufficiently small as described above, side reactions between the active material and the electrolyte can be reduced, thereby improving the lifespan characteristics of the battery. As used herein, the specific surface area of the active material may be measured for the active material powder using the BET method (Surface Area and Porosity Analyzer, Micromeritics, ASAP2020).

Meanwhile, the lithium transition metal oxide may contain nickel in an amount of 60 mol% or more, based on the total moles of transition metals, and more specifically, 70 mol% or more, 80 mol% or more, or 90 mol% or more. By including such a high content of nickel, high-capacity characteristics can be achieved.

The lithium transition metal oxide may further comprise a grain growth promoting element selected from Zr, Al, B, or a combination thereof. By further comprising the grain growth promoting element, the lithium transition metal oxide can be formed at a reduced calcination temperature, thereby preventing crystal defects such as increased cation mixing ratio caused by high-temperature calcination, and efficiently increasing the average particle diameter of the single particles during the calcination process.

The content of the grain growth promoting element may be from 0.1 mol% to 1 mol% based on the total moles of transition metals, and more specifically from 0.3 mol% to 1 mol%. More specifically, the content of Zr may be from 0.1 mol% to 0.3 mol% based on the total moles of transition metals. The content of Al may be from 0.3 mol% to 1.0 mol% based on the total moles of transition metals. The content of B may be from 0.1 mol% to 0.8 mol%. When the content of the grain growth promoting element satisfies the above range, both the effects of adding the grain growth promoting element and the prevention of deterioration of electrochemical properties due to excessive addition can be achieved.

The positive electrode active material may further comprise a coating layer formed on the lithium transition metal oxide, the coating layer comprising Co, Al, or a combination thereof. By further comprising the coating layer of the above composition, side reactions with the electrolyte can be suppressed, the structural stability of the active material can be improved, and the lifespan characteristics of the battery can be further enhanced.

The lithium transition metal oxide may be represented by the following Chemical Formula 1:

[Chemical Formula 1]    $Li_a[Ni_xCo_yMnzM_1w_1M_2w_2]O_2$

wherein $0.8 \leq a \leq 1.2$, $0.60 \leq x < 1$, $0 \leq y \leq 0.4$, $0 \leq z \leq 0.4$, $0 \leq w_1 \leq 0.01$, $0 \leq w_2 \leq 0.2$, and $x + y + z + w_1 + w_2 = 1$, $M_1$ is Zr, Al, B, or a combination thereof, and $M_2$ is Y, Mg, Ti, Nb, W, Sc, Si, V, Fe, Y, Mo, Ce, Hf, Ta, La, Sr, or a combination thereof.

In the lithium transition metal oxide represented by Chemical Formula 1, lithium may be included in an amount corresponding to a, i.e., $0.8 \leq a \leq 1.2$. If a is too small, capacity may deteriorate, and if a is too large, the strength of the calcined positive electrode active material may become excessively high, making pulverization difficult, and the amount of lithium by-products may increase, thereby increasing gas generation. Considering the effect of improving capacity characteristics by controlling lithium content and balancing sinterability during active material preparation, lithium is more preferably included in an amount of $0.9 \leq a \leq 1.1$.

In the lithium transition metal oxide represented by Chemical Formula 1, nickel may be included in an amount corresponding to x, i.e., $0.60 \leq x < 1$, $0.60 \leq x \leq 0.97$, $0.80 \leq x \leq 0.97$, or $0.90 \leq x \leq 0.97$. If the nickel content is too low, it may be difficult to achieve high-capacity batteries, and if the nickel content is too high, the structural stability of the active material may deteriorate, resulting in reduced lifespan and safety of the battery.

In the lithium transition metal oxide represented by Chemical Formula 1, cobalt may be included in an amount corresponding to y, i.e., $0 \leq y \leq 0.4$, $0 \leq y \leq 0.2$, or $0 \leq y \leq 0.1$. If the cobalt content is too low, it may be difficult to achieve both sufficient rate characteristics and high powder density of the active material. If the cobalt content is too high, the cost of raw materials increases overall and the reversible capacity may decrease.

In the lithium transition metal oxide represented by Chemical Formula 1, manganese may be included in an amount corresponding to z, i.e., $0 \leq z \leq 0.4$. If the manganese content is too low, the production cost may increase and the stability of the active material may decrease. If the manganese content is too high, the capacity and output characteristics of the battery may deteriorate.

In the lithium transition metal oxide represented by Chemical Formula 1, $M_1$ may be included in an amount corresponding to $w_1$, i.e., $0 \leq w_1 \leq 0.01$, wherein $M_1$ is a grain growth promoting element and is Zr, Al, B, or a combination thereof.

In the lithium transition metal oxide represented by Chemical Formula 1, $M_2$ may be included in an amount corresponding to $w_2$, i.e., $0 \leq w_2 \leq 0.2$, wherein $M_2$ is another doping element and is Y, Mg, Ti, Nb, W, Sc, Si, V, Fe, Y, Mo, Ce, Hf, Ta, La, Sr, or a combination thereof.

## 2. Method of Manufacturing Positive Electrode Active Material

In another embodiment of the present invention, there is provided a method for manufacturing a positive electrode active material for a lithium secondary battery, comprising: preparing a nickel-containing transition metal precursor; forming a mixture comprising the transition metal precursor and a lithium raw material and subjecting the mixture to a primary calcination to form a lithium transition metal oxide in which the number of primary particles is grown; subjecting the lithium transition metal oxide to a secondary calcination; and pulverizing the secondary-calcined lithium transition metal oxide to form a lithium transition metal oxide comprising single particles consisting of one primary particle and quasi-single particles having a spherical shape consisting of a plurality of primary particles, wherein the primary calcination is performed at a higher temperature and for a shorter time than the secondary calcination. Hereinafter, the method for manufacturing the positive electrode active material for a lithium secondary battery according to another embodiment of the present invention is described step by step.

First, a nickel-containing transition metal precursor is prepared. The transition metal precursor may be a transition metal hydroxide or a transition metal oxide. The transition metal hydroxide may be used as a positive electrode active material precursor and may be prepared, for example, by adding a chelating-agent-containing solution and a pH-adjuster-containing solution to a transition-metal-containing solution comprising a nickel raw material and, optionally, a cobalt raw material or a manganese raw material, to perform a co-precipitation reaction. The transition metal oxide may be prepared by calcining the transition metal hydroxide in an oxygen or air atmosphere at a temperature of 250 to 650 °C.

At this time, the transition metal precursor may have an average particle diameter (D50) of 5 $\mu$m or more. When the average particle diameter of the transition metal precursor satisfies the above range, a medium-particle-size single-particle lithium transition metal oxide targeted by the present invention can be readily obtained.

The nickel raw material is not particularly limited as long as it is used in the art for preparing a positive electrode active material precursor. For example, the nickel raw material may be a nickel-containing sulfate, acetate, nitrate, halide, sulfide, hydroxide, oxide, or oxyhydroxide; specifically, $NiSO_4$, $NiSO_4 \cdot 6H_2O$, $Ni(OH)_2$, NiO, NiOOH, Ni-$CO_3 \cdot 2Ni(OH)_2 \cdot 4H_2O$, nickel oxalate dihydrate ($NiC_2O_4 \cdot 2H_2O$), $Ni(NO_3)_2 \cdot 6H_2O$, a nickel fatty-acid salt, a nickel halide, or a combination thereof, but is not limited thereto. The cobalt raw material is not particularly limited as long as it is used in the art for preparing a positive electrode active material precursor. For example, the cobalt raw material may be a cobalt-containing sulfate, acetate, nitrate, halide, sulfide, hydroxide, oxide, or oxyhydroxide; specifically, $CoSO_4$, $CoSO_4 \cdot 7H_2O$, $Co(OH)_2$, CoOOH, $Co(OCOCH_3)_2 \cdot 4H_2O$, $Co(NO_3)_2 \cdot 6H_2O$, or a combination thereof, but is not limited thereto. The manganese raw material is not particularly limited as long as it is used in the art for preparing a positive electrode active material precursor. For example, the manganese raw material may be a manganese-containing sulfate, acetate, nitrate, halide, sulfide, hydroxide, oxide, oxyhydroxide, or a combination thereof; specifically, $MnSO_4$, $MnCO_3$, $Mn(NO_3)_2$,

manganese acetate, manganese dicarboxylates, manganese citrate and other manganese salts, $Mn_2O_3$, $MnO_2$, $Mn_3O_4$ and other manganese oxides, manganese oxyhydroxide, manganese chloride, or a combination thereof, but is not limited thereto.

The transition-metal-containing solution may be prepared by adding the nickel raw material and, optionally, the cobalt raw material or the manganese raw material to a solvent, specifically water, or a mixture of water and an organic solvent (e.g., an alcohol) that is miscible with water. The chelating-agent-containing solution serves to form complexes and may include, for example, $NH_3$, $NH_4OH$, $(NH_4)_2SO_4$, $NH_4NO_3$, $NH_4Cl$, $CH_3COONH_4$, $NH_4CO_3$, or a combination thereof, but is not limited thereto. The chelating-agent-containing solution may be used in the form of an aqueous solution, wherein the solvent may be water or a mixture of water and an organic solvent (e.g., an alcohol) that is miscible with water.

The pH-adjuster-containing solution serves as a precipitant or pH adjuster and may include alkaline compounds such as hydroxides of alkali metals or alkaline earth metals, hydrates thereof, or combinations thereof, for example NaOH, KOH, or $Ca(OH)_2$. The pH-adjuster-containing solution may also be used in the form of an aqueous solution, wherein the solvent may be water or a mixture of water and an organic solvent (e.g., an alcohol) that is miscible with water. In this case, the pH-adjuster-containing solution may be added in an amount such that the pH of the reaction solution becomes 11 to 13.

The co-precipitation reaction may be performed under an inert atmosphere such as nitrogen or argon, at a temperature of 30 to 70 °C, and at pH 11 to 13. By the above process, particles of nickel-cobalt-manganese (optionally with dopant elements) hydroxide are formed and precipitated in the reaction solution. The precipitated precursor particles are separated by a conventional method and washed and dried to obtain the precursor. The precursor may be a secondary particle in which primary particles are aggregated. At this time, by adjusting the concentrations of the nickel raw material, the cobalt raw material, and the manganese raw material, the molar ratios of nickel, cobalt, and manganese in the precursor can be controlled. Meanwhile, a dopant element may be doped at the stage of preparing the positive electrode active material precursor. In this case, a dopant raw material is additionally introduced into the transition-metal-containing solution to perform a co-precipitation reaction, thereby doping the dopant element into the precursor.

Next, a mixture comprising the transition metal precursor and a lithium raw material is formed, followed by primary calcination to form a lithium transition metal oxide in which the number of primary particles has grown. More specifically, by the primary calcination, a single-particle type lithium transition metal oxide composed of a plurality of primary particles can be formed. Thereafter, the grown lithium transition metal oxide is subjected to a secondary calcination.

In the method for manufacturing the active material according to one embodiment of the present invention, calcination is carried out in two stages as described above, wherein the primary calcination temperature is higher than the secondary calcination temperature, and the primary calcination time is shorter than the secondary calcination time. Through the high-temperature, short-time primary calcination, the number of primary particles within a single particle can be grown to an appropriate range. Through the low-temperature, long-time secondary calcination, rearrangement of the crystal can be induced to relieve internal stress increased during the high-temperature primary calcination, thereby reducing nickel cation mixing.

More specifically, in a conventional one-step, high-temperature, long-time single-particle manufacturing method, nickel cation mixing occurs and a rocksalt impurity phase is generated. In contrast, the manufacturing method according to one embodiment of the present invention prevents the above problem by the high-temperature, short-time primary calcination and the low-temperature, long-time secondary calcination, and appropriately grows the number of primary particles within a single particle to induce the final active material to include single particles and single-particle type particles composed of a plurality of primary particles.

At this time, the primary calcination temperature may be 850 to 900 °C, and the primary calcination time may be 5 to 9 hours. The secondary calcination temperature may be 760 to 820 °C, and the secondary calcination time may be 9 to 12 hours. When the primary calcination temperature and time and the secondary calcination temperature and time satisfy the above ranges, the active material composition and properties targeted by the present invention can be achieved more readily.

The lithium raw material may be, without particular limitation as long as it is water-soluble, a lithium-containing sulfate, nitrate, acetate, carbonate, oxalate, citrate, halide, hydroxide, or oxyhydroxide. Specifically, the lithium raw material may be $Li_2CO_3$, $LiNO_3$, $LiNO_2$, $LiOH$, $LiOH·H_2O$, $LiH$, $LiF$, $LiCl$, $LiBr$, $LiI$, $CH_3COOLi$, $Li_2O$, $Li_2SO_4$, $Li_3C_6H_5O_7$, or a combination thereof, but is not limited thereto. The calcination may be performed under an oxygen or air atmosphere. When calcined under such an atmosphere, the local oxygen partial pressure increases, which can improve the crystallinity of the positive electrode active material.

Meanwhile, other dopant elements may be doped at the stage of forming the lithium transition metal oxide. In this case, other dopant raw materials are further added during formation of the mixture and calcined, thereby doping the other dopant elements into the lithium transition metal oxide.

Meanwhile, the transition metal precursor prepared in the step of preparing the transition metal precursor, or the lithium transition metal oxide formed in the step of primary calcination to form a lithium transition metal oxide in which the number of primary particles has grown, may further comprise a grain growth promoting element selected from Zr, Al, B, or a combination thereof. That is, the grain growth promoting element may be doped at the stage of forming the transition metal precursor, or it may be doped at the stage of forming the lithium transition metal oxide as the active material.

At this time, the content of the grain growth promoting element may be from 0.1 mol% to 1 mol% based on the total moles of transition metals in the transition metal precursor or the lithium transition metal oxide, and more specifically, from 0.3 mol% to 1 mol%. More specifically, the content of Zr may be from 0.1 mol% to 0.3 mol% based on the total moles of transition metals in the transition metal precursor or the lithium transition metal oxide. The content of Al may be from 0.3 mol% to 1.0 mol% based on the total moles of transition metals in the transition metal precursor or the lithium transition metal oxide. The content of B may be from 0.1 mol% to 0.8 mol%. Since the technical significance of introducing and controlling the content of the grain growth promoting element is as described above, detailed description thereof will be omitted.

Next, the secondary-calcined lithium transition metal oxide is pulverized to form a lithium transition metal oxide comprising single particles consisting of one primary particle and quasi-single particles having a spherical shape consisting of a plurality of primary particles. Thus, the positive electrode active material according to the present invention can be obtained.

Optionally, as required, after the step of forming a lithium transition metal oxide comprising single particles consisting of one primary particle and quasi-single particles having a spherical shape consisting of a plurality of primary particles, a step of forming a coating layer comprising Co, Al, or a combination thereof may further be included. More specifically, the coating layer may be formed by mixing the lithium transition metal oxide single particles with a cobalt raw material, an aluminum raw material, or a combination thereof, followed by heat treatment. Since the technical significance of forming the coating layer is as described above, detailed description thereof will be omitted.

3. Positive Electrode and Lithium Secondary Battery

In another embodiment of the present invention, there is provided a positive electrode for a lithium secondary battery comprising the aforementioned positive electrode active material.

In another embodiment of the present invention, there is provided a lithium secondary battery comprising the positive electrode. More specifically, the lithium secondary battery may include a positive electrode, a negative electrode, a separator, and an electrolyte.

Additionally, the lithium secondary battery may optionally further include a battery container housing an electrode assembly of the positive electrode, the negative electrode, and the separator, and a sealing member for sealing the battery container.

Specifically, the positive electrode may include a positive electrode current collector and a positive electrode active material layer disposed on the positive electrode current collector, wherein the positive electrode active material layer comprises the aforementioned positive electrode active material. The positive electrode current collector is not particularly limited as long as it has conductivity without causing chemical changes in the battery. Examples include stainless steel, aluminum, nickel, titanium, sintered carbon, or aluminum or stainless steel whose surface is treated with carbon, nickel, titanium, silver, or the like. The positive electrode current collector may typically have a thickness of 3 to 500 $\mu$m, and fine irregularities may be formed on its surface to enhance adhesion of the positive electrode active material. It may be used in various forms such as films, sheets, foils, nets, porous bodies, foams, or non-woven fabrics.

The positive electrode active material layer may further include a binder and/or a conductive material in addition to the aforementioned positive electrode active material. The binder serves to improve adhesion between the positive electrode active material particles and adhesion between the positive electrode active material and the positive electrode current collector. Specific examples include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated EPDM, styrene-butadiene rubber (SBR), fluororubber, or various copolymers thereof, and mixtures of one or more of these may be used, but are not limited thereto. The binder may be included in an amount of 1 to 30% by weight based on the total weight of the positive electrode active material layer.

The conductive material is used to impart conductivity to the electrode and is not particularly limited as long as it possesses electronic conductivity without causing chemical changes in the battery. Specific examples include graphite such as natural graphite or artificial graphite; carbon-based materials such as carbon black, acetylene black, ketjen black, channel black, furnace black, lamp black, thermal black, or carbon fibers; metal powders or metal fibers such as copper, nickel, aluminum, or silver; conductive whiskers such as zinc oxide or potassium titanate; conductive metal oxides such as titanium oxide; or conductive polymers such as polyphenylene derivatives, and mixtures of one or more of these may be used, but are not limited thereto. The conductive material may typically be included in an amount of 1 to 30% by weight based on the total weight of the positive electrode active material layer.

The positive electrode may be manufactured according to a conventional method for manufacturing a positive electrode, except for the use of the aforementioned positive electrode active material. Specifically, the positive electrode may be manufactured by applying a composition for forming a positive electrode active material layer, which comprises the aforementioned positive electrode active material and, as necessary, optionally a binder, conductive material, or solvent, onto the positive electrode current collector, followed by drying and rolling. In this case, the types and contents of the positive electrode active material, binder, and conductive material are as described above.

The solvent may be a solvent commonly used in the art, such as dimethyl sulfoxide (DMSO), isopropyl alcohol, N-methylpyrrolidone (NMP), acetone, or water, and mixtures of one or more thereof may be used. The amount of the solvent used may be sufficient to dissolve or disperse the positive electrode active material, conductive material, and binder in consideration of slurry coating thickness and manufacturing yield, and to provide a viscosity that can exhibit excellent coating thickness uniformity during electrode manufacturing.

Alternatively, the positive electrode may be manufactured by casting the composition for forming a positive electrode active material layer onto a separate support, and then laminating the film obtained by peeling it off from the support onto the positive electrode current collector.

The negative electrode may include a negative electrode current collector and a negative electrode active material layer disposed on the negative electrode current collector. The negative electrode current collector is not particularly limited as long as it possesses high conductivity without causing chemical changes in the battery. Examples include copper, stainless steel, aluminum, nickel, titanium, sintered carbon, surface-treated copper or stainless steel treated with carbon, nickel, titanium, silver, and the like, and aluminum-cadmium alloys. The negative electrode current collector may typically have a thickness of 3 to 500 $\mu$m, and, similar to the positive electrode current collector, fine irregularities may be formed on its surface to enhance the binding force of the negative electrode active material. The negative electrode current collector may be used in various forms such as films, sheets, foils, nets, porous bodies, foams, or non-woven fabrics.

The negative electrode active material layer may optionally include a binder and/or a conductive material together with the negative electrode active material. For example, the negative electrode may be manufactured by coating on the negative electrode current collector a composition for forming a negative electrode active material layer, comprising a negative electrode active material and, optionally, a binder and a conductive material, followed by drying. Alternatively, the negative electrode may be manufactured by casting the composition for forming the negative electrode active material layer onto a separate support, peeling off the resulting film, and laminating the film onto the negative electrode current collector.

The negative electrode active material may be a compound capable of reversible intercalation and deintercalation of lithium. Specific examples include carbonaceous materials such as artificial graphite, natural graphite, graphitized carbon fibers, and amorphous carbon; metallic compounds capable of alloying with lithium such as Si, Al, Sn, Pb, Zn, Bi, In, Mg, Ga, Cd, Si alloys, Sn alloys, or Al alloys; metal oxides capable of doping and de-doping lithium such as SiO$\beta$ ($0 < \beta < 2$), SnO$_2$, vanadium oxides, and lithium vanadium oxides; or composites including the above metallic compounds and carbonaceous materials such as Si-C composites or Sn-C composites. One or more of these may be used.

In addition, a lithium metal thin film may also be used as the negative electrode active material.

The carbonaceous material may include both low-crystalline carbon and high-crystalline carbon. Representative examples of low-crystalline carbon include soft carbon and hard carbon. Representative examples of high-crystalline carbon include natural graphite or artificial graphite in amorphous, flake, platelet, spherical, or fibrous forms; kish graphite; pyrolytic carbon; mesophase pitch-based carbon fibers; meso-carbon microbeads; mesophase pitches; and high-temperature fired carbons such as petroleum pitch or coal tar pitch derived cokes.

The binder and the conductive material may be the same as those described above for the positive electrode.

The separator serves to separate the negative electrode from the positive electrode and to provide a pathway for lithium ion migration. The separator may be any separator conventionally used in lithium secondary batteries without particular limitation, and it is particularly preferred that the separator has low resistance to ion movement of the electrolyte and excellent electrolyte wettability. Specifically, porous polymer films may be used, such as polyolefin-based polymer films manufactured from ethylene homopolymers, propylene homopolymers, ethylene/butene copolymers, ethylene/-hexene copolymers, and ethylene/methacrylate copolymers, or multilayer structures of two or more thereof. In addition, conventional porous non-woven fabrics such as non-woven fabrics made of high-melting-point glass fibers or polyethylene terephthalate fibers may also be used. Furthermore, coated separators containing ceramic components or polymer materials may be used to ensure heat resistance or mechanical strength, and may optionally be used in single-layer or multi-layer structures.

The electrolyte may be selected from organic liquid electrolytes, inorganic liquid electrolytes, solid polymer electrolytes, gel-type polymer electrolytes, solid inorganic electrolytes, molten inorganic electrolytes, and the like, without being limited thereto.

Specifically, the organic liquid electrolyte may comprise an organic solvent and a lithium salt. The organic solvent is not particularly limited as long as it can serve as a medium through which ions involved in the electrochemical reaction of the battery can migrate. Specific examples of the organic solvent include ester-based solvents such as methyl acetate, ethyl acetate, $\gamma$-butyrolactone, and $\varepsilon$-caprolactone; ether-based solvents such as dibutyl ether and tetrahydrofuran; ketone-based solvents such as cyclohexanone; aromatic hydrocarbon-based solvents such as benzene and fluorobenzene; carbonate-based solvents such as dimethyl carbonate (DMC), diethyl carbonate (DEC), methylethyl carbonate (MEC), ethylmethyl carbonate (EMC), ethylene carbonate (EC), and propylene carbonate (PC); alcohol-based solvents such as ethanol and isopropyl alcohol; nitriles such as R-CN (where R is a linear, branched, or cyclic hydrocarbon group having 2 to 20 carbon atoms, which may include double bonds, aromatic rings, or ether bonds); amides such as dimethylformamide; dioxolanes such as 1,3-dioxolane; and sulfolanes.

Among these, carbonate-based solvents are preferred, and a mixture of cyclic carbonates (e.g., ethylene carbonate or propylene carbonate), which provide high ion conductivity and high dielectric constant to improve charge/-discharge performance, and linear carbonate compounds (e.g., ethylmethyl carbonate, dimethyl carbonate, or diethyl carbonate), which provide low viscosity, is more preferred. In this case, the cyclic carbonate and the linear carbonate may be mixed in a volume ratio of about 1:1 to about 1:9, thereby providing excellent electrolyte performance.

The lithium salt is not particularly limited as long as it can provide lithium ions used in the lithium secondary battery. Specific examples of the lithium salt include $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, or $LiB(C_2O_4)_2$. The concentration of the lithium salt is preferably in the range of 0.1 to 2.0 M. When the concentration of the lithium salt is within this range, the electrolyte may have appropriate conductivity and viscosity, thereby providing excellent electrolyte performance and enabling effective migration of lithium ions.

In addition to the above-described electrolyte components, the electrolyte may further comprise, as additives, one or more selected for the purposes of improving battery lifespan characteristics, suppressing capacity fade, or enhancing discharge capacity. Examples include haloalkylene carbonate compounds such as difluoroethylene carbonate, pyridine, triethyl phosphite, triethanolamine, cyclic ethers, ethylenediamine, n-glyme, hexamethylphosphoramide, nitrobenzene derivatives, sulfur, quinone imine dyes, N-substituted oxazolidinones, N,N-substituted imidazolidinones, ethylene glycol dialkyl ethers, ammonium salts, pyrrole, 2-methoxy ethanol, or aluminum trichloride. The additive may be included in an amount of 0.1 to 5 wt% based on the total weight of the electrolyte.

In another embodiment of the present invention, there is provided a battery module comprising the lithium secondary battery as a unit cell, and a battery pack comprising the battery module. The battery module or battery pack may be used as a power source for medium- to large-sized devices, such as power tools, electric vehicles (EVs), hybrid electric vehicles (HEVs), plug-in hybrid electric vehicles (PHEVs), or power storage systems.

Hereinafter, embodiments of the present invention will be described in further detail with reference to Examples. However, the following Examples are merely preferred embodiments of the present invention, and the present invention is not limited thereto.

**Example 1**

(1) Preparation of Positive Electrode Active Material

(Preparation of Transition Metal Hydroxide) A transition metal hydroxide having a composition of $(Ni_{0.96}Co_{0.03}Mn_{0.01})(OH)_2$ with an average particle diameter (D50) of 7 $\mu$m was prepared by a conventional co-precipitation method.

(Preparation of Transition Metal Oxide) Subsequently, 500 g of the transition metal hydroxide, 0.993 g of $ZrO_2$ corresponding to 0.15 mol% of Zr based on 100 mol% of the total transition metals in the transition metal hydroxide, and 2.096 g of $Al(OH)_3$ corresponding to 0.5 mol% of Al were mixed, calcined in air at 500 °C for 4 hours, and subjected to dehydration to prepare a transition metal oxide precursor containing Zr and Al.

(Calcination) Thereafter, 150 g of the transition metal oxide precursor was mixed with 83.963 g of $LiOH \cdot H_2O$ as a lithium raw material such that the Li/Me molar ratio was 1.02, followed by a primary calcination at 850 °C for 6.7 hours and a secondary calcination at 790 °C for 9.8 hours to prepare a lithium transition metal oxide.

(Pulverization) The secondary-calcined lithium transition metal oxide was then pulverized.

(Coating) Thereafter, 130 g of the pulverized lithium transition metal oxide was mixed with 0.560 g of $LiOH \cdot H_2O$, 2.504 g of $Co(OH)_2$, and 0.189 g of $Al(OH)_3$, followed by heat treatment at 650-700 °C for 15 hours to form a coating layer on the surface containing 2 mol% Co and 0.2 mol% Al, thereby preparing a positive electrode active material.

(2) Preparation of Lithium Secondary Battery

A slurry for electrode plate fabrication was prepared by mixing the positive electrode active material, a conductive agent (carbon black, Denka black), and a binder (PVDF, KF1100) at a weight ratio of 96.5 : 1.5 : 2, and adding NMP (N-methyl-2-pyrrolidone) to adjust the viscosity such that the solid content was about 30%. The slurry was coated onto an Al foil having a thickness of 15 $\mu$m using a doctor blade, followed by drying and rolling. The electrode loading amount was 15.0 mg/cm$^2$, and the rolling density (25 °C, 20 kN) was 3.6 g/cm$^3$.

The electrolyte was 1 M $LiPF_6$ in EC:DMC:EMC = 3:4:3 (vol%) with 3.0 vol% of VC added based on the total electrolyte volume. A coin cell was assembled using the above electrolyte, a polypropylene (PP) separator, and a lithium negative electrode (200 $\mu$m, Honzo Metal).

**Examples 2 to 4 and Comparative Example 1**

Positive electrode active materials and lithium secondary batteries were prepared in the same manner as in Example 1, except that the calcination temperatures and times of the primary and secondary calcinations were varied as shown in Table 1 below.

**Comparative Examples 2 and 4 to 6**

A transition metal hydroxide with an average particle diameter (D50) of 4 $\mu$m was prepared in the step of preparing the transition metal hydroxide. Positive electrode active materials and lithium secondary batteries were then prepared in the same manner as in Example 1, except that the calcination temperatures and times of the primary and secondary calcinations were varied as shown in Table 1 below.

**Comparative Example 3**

A transition metal hydroxide having a composition of $(Ni_{0.96}Co_{0.03}Mn_{0.01})(OH)_2$ with an average particle diameter (D50) of 13 $\mu$m was prepared by a conventional co-precipitation method. Thereafter, 150 g of the transition metal hydroxide was mixed with 71.992 g of $LiOH \cdot H_2O$ such that the Li/Me molar ratio was 1.06, followed by calcination at 750 °C for 12 hours, pulverization, washing, and drying to prepare a lithium transition metal oxide. Subsequently, 130 g of the lithium transition metal oxide was mixed with 0.371 g of $H_3BO_3$, followed by heat treatment at 250-300 °C for 6 hours to form a coating layer on the surface containing 0.45 mol% B, thereby preparing a positive electrode active material. A lithium secondary battery was then fabricated in the same manner as in Example 1.

Table 1 summarizes the manufacturing methods of the Examples and Comparative Examples.

[Table 1]

| Classificatio n | Precursor Average Particle Size (D50, $\mu$m) | Primary Calcination Temperature (°C) | Primary Calcination Time (h) | Secondary Calcination Temperature (°C) | Secondary Calcination Time (h) |
|---|---|---|---|---|---|
| Example 1 | 7 | 850 | 6.7 | 790 | 9.8 |
| Example 2 | 7 | 860 | 4.9 | 790 | 9.8 |
| Example 3 | 7 | 860 | 6.7 | 790 | 9.8 |
| Example 4 | 7 | 860 | 8.8 | 790 | 9.8 |
| C-Example 1 | 7 | 840 | 3.8 | 790 | 9.8 |
| C-Example 2 | 4 | 830 | 3.8 | 740 | 9.8 |
| C-Example 3 | 13 | 750 | 12 | - | - |
| C-Example 4 | 7 | 840 | 6.7 | 860 | 9.8 |
| C-Example 5 | 7 | 850 | 12 | 790 | 8 |
| C-Example 6 | 7 | 870 | 12 | - | - |

**Experimental Example 1: Observation of SEM Images of Active Materials**

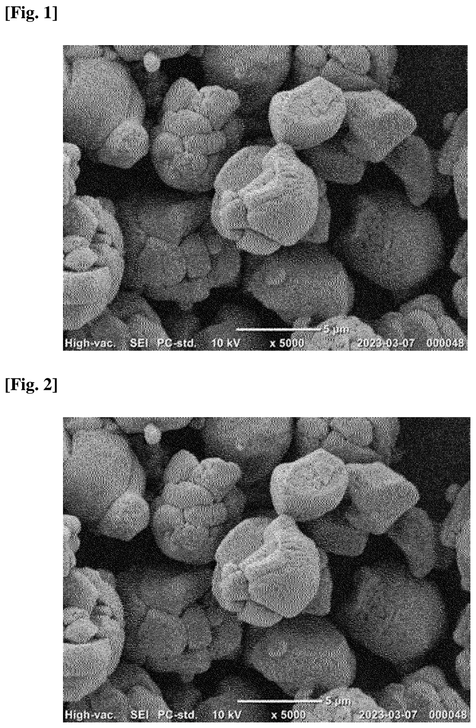

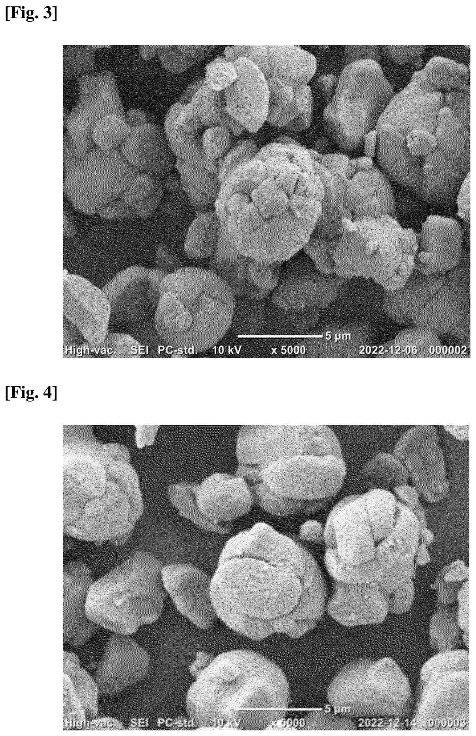

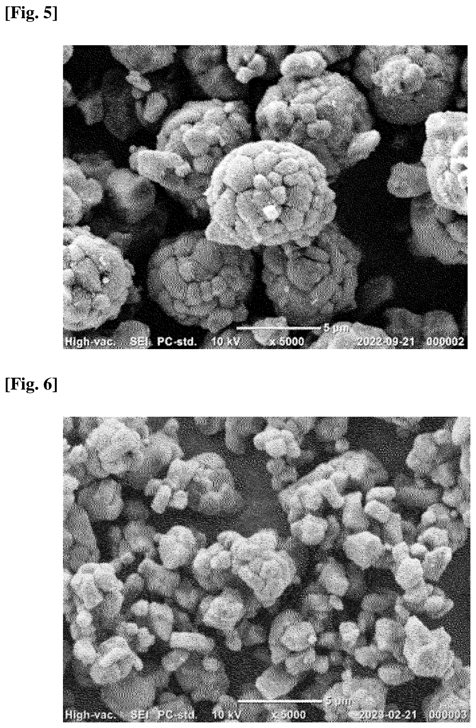

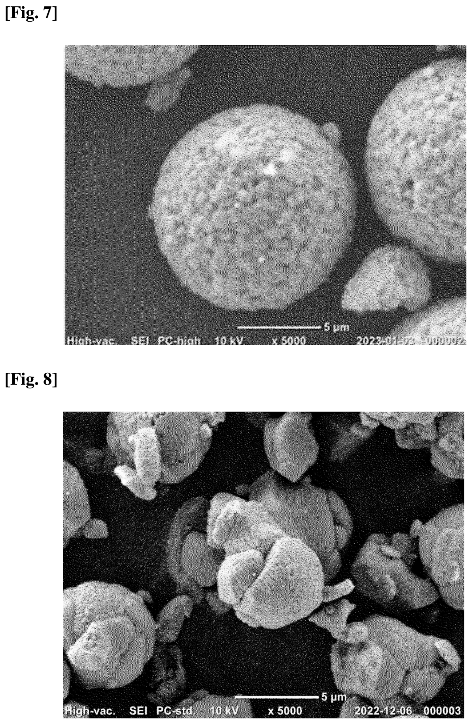

The SEM (scanning electron microscope) images of the positive electrode active materials prepared according to the Examples and Comparative Examples were observed, and the results are shown in FIGS. 1 to 7 in the order of Examples 1 to 4 and Comparative Examples 1 to 6, respectively.

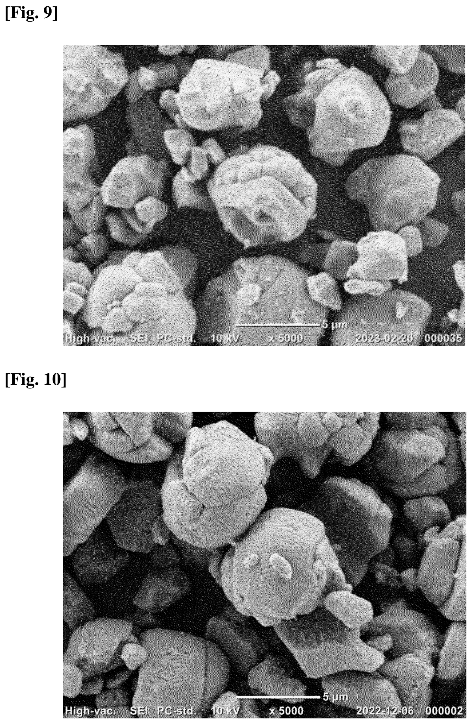

Referring to FIGS. 1 to 9, it was confirmed that the active materials of Examples 1 to 4 and Comparative Examples 1, 2, and 4 to 6 were not of the conventional secondary particle morphology, in which several tens to several hundreds of primary particles are aggregated, but were of a single-particle type morphology. In contrast, Comparative Example 3 was confirmed to have a conventional secondary particle morphology.

In addition, in Examples 1 to 4, it was confirmed that the active materials had medium particle sizes and included both single particles consisting of one primary particle and quasi-single particles consisting of a plurality of primary particles. On the other hand, Comparative Example 1 clearly showed that the number of primary particles contained in the quasi-single particle was significantly larger. Comparative Example 2 was confirmed to have a smaller particle size compared to the Examples, i.e., a small particle size.

**Experimental Example 2: Evaluation of Physical Properties of Positive Electrode Active Materials**

The physical properties of the positive electrode active materials prepared according to the Examples and Comparative Examples were evaluated, and the results are shown in Table 2 below. The evaluation methods are as follows:
(1) Measurement of Average Particle Diameter (D50)
The particle diameter corresponding to 50% of the cumulative volume was measured for the active material powder using a laser diffraction method.
(2) Evaluation of Equation 1
The value represented by [Equation 1] = D50 - D50p was evaluated, wherein D50 is the average particle diameter (D50) of the positive electrode active material before application of a pressure of 9 tons, and D50p is the average particle diameter (D50) of the positive electrode active material after application of a pressure of 9 tons.
(3) Average Number of Primary Particles in a Single Particle
SEM (scanning electron microscope) images at 5,000× magnification for a 25 $\mu$m × 20 $\mu$m two-dimensional image were taken at five points per sample, and for at least five random single particles at each point, the number of primary particles visually observed was counted, and the arithmetic mean value was derived.
(4) Evaluation of Compaction Density (9 tons)
The density after application of a pressure of 9 tons was evaluated. Specifically, 3 g of an active material sample was loaded into a pellet having a diameter of 13 mm, and a pressure of 9 tons was applied using a hydraulic press machine manufactured by Carver. The compaction density was then measured from the change in height of the pellet before and after pressure application. The specific calculation formula is as follows:

Density after application of 9 tons = Weight of active material sample (3 g) / ($\pi$ × (1.3 cm /2)$^2$ × (change in height before and after pressure application))          [Calculation Formula 1]

where $\pi$ denotes the circumference ratio.
(5) Evaluation of BET Specific Surface Area
The specific surface area was measured using the BET method with a Surface Area and Porosity Analyzer (Micromeritics, ASAP2020).

[Table 2]

| Classification | Average Particle Diameter (D50, $\mu$m) | Equation 1 ($\mu$m) | Average Number of Primary Particles in Quasi-Single Particle | Compaction Density (9 tons, g/cc) | Specific Surface Area (m$^2$/g) |
|---|---|---|---|---|---|
| Example 1 | 7.01 | 1.65 | 7 | 3.63 | 0.344 |
| Example 2 | 6.18 | 1.52 | 6 | 3.62 | 0.326 |
| Example 3 | 6.34 | 1.28 | 7 | 3.63 | 0.414 |
| Example 4 | 6.41 | 1.27 | 4 | 3.62 | 0.523 |
| C-Example 1 | 7.01 | 2.0 | 20 | 3.60 | 0.561 |
| C-Example 2 | 4.13 | 2.34 | - | 3.50 | 0.83 |
| C-Example 3 | 13.64 | 3.26 | > 100 | 3.77 | 0.57 |
| C-Example 4 | 6.12 | 1.13 | 2 | 3.58 | 0.372 |
| C-Example 5 | 6.03 | 1.18 | 3 | 3.59 | 0.365 |
| C-Example 6 | 6.24 | 1.12 | 2 | 3.58 | 0.345 |

Referring to Table 2, in the case of Examples 1 to 4, in which the precursor particle size and the temperatures and times of the primary and secondary calcinations were appropriately controlled during preparation of the active material, it was confirmed that the average particle diameter, the value of Equation 1, the average number of primary particles in a quasi-single particle, the compaction density, and the specific surface area of the active material were all appropriately obtained within the target ranges of the present invention.

In contrast, in Comparative Example 1, it was confirmed that the primary calcination temperature was too low, resulting in an excessively large average number of primary particles in a single particle. Accordingly, the value of Equation 1 became too large, the particle strength was weak, and the specific surface area was excessively large.

In Comparative Example 2, it was confirmed that the precursor particle size was too small, resulting in an excessively small average particle diameter of the active material. The value of Equation 1 was too large, leading to weak particle strength, and the specific surface area was excessively large. In addition, due to the small average particle diameter of the active material, the compaction density was also degraded.

In Comparative Example 3, which was a conventional secondary particle active material, it was confirmed that the value of Equation 1 was too large, the particle strength was weak, and the specific surface area was large.

In Comparative Example 4, where the secondary calcination temperature was higher than the primary calcination temperature, it was confirmed that the value of Equation 1 became too small.

In Comparative Example 5, where the secondary calcination time was shorter than the primary calcination time, it was confirmed that the value of Equation 1 became too small.

In Comparative Example 6, where only one-step calcination was performed at high temperature for a long time instead of two-step calcination, it was confirmed that the value of Equation 1 became too small.

Experimental Example 3: Evaluation of Electrochemical Characteristics of Batteries

(1) Evaluation of Initial Charge and Discharge Capacity and Initial Efficiency

After fabricating half-cells of lithium secondary batteries and aging them at 25 °C for 12 hours, charge/discharge tests were carried out. For initial capacity evaluation, a reference capacity of 200 mAh/g was used. The cells were charged at a constant current of 0.1 C to 4.25 V, followed by a constant-voltage charge until the cutoff current reached 0.05 C. After charging, a rest time of 10 minutes was given, and then the cells were discharged at a constant current of 0.1 C based on 200 mAh/g to 2.5 V.

(2) Evaluation of High-Temperature Capacity Retention (45 °C, 50 Cycles)

For evaluation of high-temperature capacity retention, the cells were charged at 45 °C with a constant current of 0.5 C to 4.25 V, followed by a constant-voltage charge until the cutoff current reached 0.05 C. After charging, a rest time of 10 minutes was given, and then the cells were discharged at a constant current of 1.0 C to 2.5 V. Under the above charge/discharge conditions, 50 charge/discharge cycles were performed, and the capacity retention was calculated as the ratio of the capacity in the 50th cycle to that in the first cycle.

(3) Evaluation of High-Temperature Resistance Increase (45 °C, 50 Cycles)

For evaluation of high-temperature resistance increase, the cells were charged at 45 °C with a constant current of 0.5 C to 4.25 V, followed by a constant-voltage charge until the cutoff current reached 0.05 C. After charging, a rest time of 10 minutes was given, and then the cells were discharged at a constant current of 1.0 C to 2.5 V. Under the above charge/discharge conditions, 50 charge/discharge cycles were performed, and the resistance increase was calculated as the ratio of the resistance in the 50th cycle relative to that in the first cycle.

[Table 3]

| Classification | Charge Capacity (mAh/g, 0.1C) | Discharge Capacity (mAh/g, 0.1C) | Initial Efficiency (%) | High-Temperature Capacity Retention (%, 50 cycles) | High-Temperature Resistance Increase (%, 50 cycles) |
|---|---|---|---|---|---|
| Example 1 | 242.0 | 210.6 | 87.0 | 93.0 | 87.1 |
| Example 2 | 241.2 | 206.6 | 85.7 | 92.7 | 86.2 |
| Example 3 | 240.4 | 206.2 | 85.8 | 92.9 | 90.5 |
| Example 4 | 241.8 | 208.7 | 86.3 | 93.75 | 70.1 |
| C-Example 1 | 241.8 | 212.3 | 87.8 | 91.1 | 100.3 |
| C-Example 2 | 243.4 | 216.7 | 89.0 | 91.5 | 76.1 |
| C-Example 3 | 243.9 | 218.4 | 89.5 | 85.0 | 135.3 |

(continued)

| Classification | Charge Capacity (mAh/g, 0.1C) | Discharge Capacity (mAh/g, 0.1C) | Initial Efficiency (%) | High-Temperature Capacity Retention (%, 50 cycles) | High-Temperature Resistance Increase (%, 50 cycles) |
|---|---|---|---|---|---|
| C-Example 4 | 237.7 | 202.0 | 85.0 | 92.5 | 85.3 |
| C-Example 5 | 239.5 | 204.5 | 85.4 | 92.7 | 90.5 |
| C-Example 6 | 235.6 | 200.5 | 85.1 | 91.5 | 86.0 |

Referring to Table 3, in the case of Examples 1 to 4, in which the average particle diameter of the active material, the value of Equation 1, the average number of primary particles in the quasi-single particle, and the specific surface area were appropriately controlled, it was confirmed that the battery exhibited excellent capacity, initial efficiency, high-temperature capacity retention, and high-temperature resistance increase.

In contrast, in Comparative Example 1, where the average number of primary particles in the quasi-single particle was excessively large, it was confirmed that the particle strength was inferior, resulting in degraded high-temperature lifespan characteristics.

In Comparative Example 2, having a small-particle-size range of average particle diameter, the capacity and initial efficiency were favorable, but it was confirmed that the high-temperature capacity retention was inferior compared to the Examples. In addition, deterioration of electrode energy density was anticipated.

In Comparative Example 3, which was a conventional secondary particle, the capacity and initial efficiency were favorable, but it was confirmed that the high-temperature lifespan characteristics significantly deteriorated due to the inferior particle strength of the secondary particles.

In Comparative Examples 4 to 6, since the value of Equation 1 was too small, the particle strength was excellent, but it was confirmed that the battery capacity and initial efficiency were inferior.

Although the preferred embodiments of the present invention have been described above, the present invention is not limited thereto, and various modifications may be made within the scope of the claims, the detailed description of the invention, and the accompanying drawings, and such modifications are also naturally encompassed within the scope of the present invention. Accordingly, the substantial scope of rights of the present invention shall be defined by the appended claims and their equivalents.

**Claims**

1. A positive electrode active material for a lithium secondary battery, which is a nickel-containing layered lithium transition metal oxide, wherein the positive electrode active material has an average particle diameter (D50) from 5 to 8 $\mu$m, comprises single particles consisting of one primary particle and quasi-single particles having a spherical shape consisting of a plurality of primary particles, and satisfies the following Equation 1:

[Equation 1]

$$1.2 \ \mu m \leq D50 - D50p \leq 1.8 \ \mu m$$

wherein D50 is the average particle diameter (D50) of the positive electrode active material before application of a pressure of 9 tons, and D50p is the average particle diameter (D50) of the positive electrode active material after application of a pressure of 9 tons.

2. The positive electrode active material of claim 1, wherein an average number of primary particles contained in the quasi-single particle is 8 or less.

3. The positive electrode active material of claim 1, wherein an average aspect ratio of the primary particles contained in the quasi-single particle is 1.1 or more.

4. The positive electrode active material of claim 1, wherein a compaction density after application of a pressure of 9 tons is 3.61 g/cc or more.

5. The positive electrode active material of claim 1, wherein a BET specific surface area is 0.55 m$^2$/g or less.

6. The positive electrode active material of claim 1, wherein the lithium transition metal oxide contains nickel in an amount of 60 mol% or more based on the total moles of transition metals.

7. The positive electrode active material of claim 1, wherein the lithium transition metal oxide further comprises a grain growth promoting element selected from Zr, Al, B, or a combination thereof.

8. The positive electrode active material of claim 7, wherein the grain growth promoting element is contained in an amount of 0.1 mol% to 1 mol% based on the total moles of transition metals.

9. The positive electrode active material of claim 1, further comprising a coating layer formed on the lithium transition metal oxide, the coating layer comprising Co, Al, or a combination thereof.

10. The positive electrode active material of claim 1, wherein the lithium transition metal oxide is represented by the following Chemical Formula 1:

[Chemical Formula 1]      $Li_a[Ni_xCo_yMnzM_1w_1M_2w_2]O_2$

wherein $0.8 \leq a \leq 1.2$, $0.60 \leq x < 1$, $0 \leq y \leq 0.4$, $0 \leq z \leq 0.4$, $0 \leq w_1 \leq 0.01$, $0 \leq w_2 \leq 0.2$, and $x + y + z + w_1 + w_2 = 1$,

$M_1$ is Zr, Al, B, or a combination thereof, and
$M_2$ is Y, Mg, Ti, Nb, W, Sc, Si, V, Fe, Y, Mo, Ce, Hf, Ta, La, Sr, or a combination thereof.

11. A method for manufacturing a positive electrode active material for a lithium secondary battery, comprising:

preparing a nickel-containing transition metal precursor;
forming a mixture comprising the transition metal precursor and a lithium raw material and subjecting the mixture to a primary calcination to form a lithium transition metal oxide in which the number of primary particles is grown;
subjecting the lithium transition metal oxide to a secondary calcination; and
pulverizing the secondary-calcined lithium transition metal oxide to form a lithium transition metal oxide comprising single particles consisting of one primary particle and quasi-single particles having a spherical shape consisting of a plurality of primary particles,
wherein the primary calcination is performed at a higher temperature and for a shorter time than the secondary calcination.

12. The method of claim 11, wherein in the step of preparing the transition metal precursor, the transition metal precursor has an average particle diameter (D50) of 5 μm or more.

13. The method of claim 11, wherein the transition metal precursor prepared in the step of preparing the transition metal precursor or the lithium transition metal oxide formed in the step of primary calcination further comprises a grain growth promoting element selected from Zr, Al, B, or a combination thereof.

14. The method of claim 13, wherein the grain growth promoting element is contained in an amount of 0.1 mol% to 1 mol% based on the total moles of transition metals in the transition metal precursor or the lithium transition metal oxide.

15. A positive electrode for a lithium secondary battery, comprising the positive electrode active material of any one of claims 1 to 10.

16. A lithium secondary battery comprising the positive electrode of claim 15.

[Fig. 1]

[Fig. 2]

[Fig. 3]

[Fig. 4]

[Fig. 5]

[Fig. 6]

[Fig. 7]

[Fig. 8]

[Fig. 9]

[Fig. 10]

## INTERNATIONAL SEARCH REPORT

| International application No. |
|---|
| **PCT/KR2024/003436** |

### A. CLASSIFICATION OF SUBJECT MATTER

**H01M 4/525**(2010.01)i; **H01M 4/505**(2010.01)i; **H01M 4/36**(2006.01)i; **C01G 53/00**(2006.01)i; **H01M 4/131**(2010.01)i; **H01M 10/052**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/525(2010.01); H01M 10/052(2010.01); H01M 4/131(2010.01); H01M 4/505(2010.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬이차전지(lithium secondary battery), 양극 활물질(cathode material), 니켈 (nickel), 입경(particle size), 단입자(single particle), 1차입자(primary particle), 2차입자(secondary particle), 소성(calcining)

### C. DOCUMENTS CONSIDERED TO BE RELEVANT

| Category* | Citation of document, with indication, where appropriate, of the relevant passages | Relevant to claim No. |
|---|---|---|
| X | KR 10-2022-0127242 A (SUMITOMO CHEMICAL CO., LTD.) 19 September 2022 (2022-09-19) See claims 1, 6-7, 9-10 and 12; and paragraphs [0026]-[0027], [0037], [0096], [0214], [0220], [0223]-[0224], [0284], [0288]-[0289], [0292], [0295]-[0296] and [0549]. | 1-16 |
| A | KR 10-2020-0117977 A (SUMITOMO CHEMICAL CO., LTD.) 14 October 2020 (2020-10-14) See entire document. | 1-16 |
| A | KR 10-2020-0001230 A (SAMSUNG ELECTRONICS CO., LTD.) 06 January 2020 (2020-01-06) See entire document. | 1-16 |
| A | KR 10-2021-0093173 A (SUMITOMO CHEMICAL CO., LTD.) 27 July 2021 (2021-07-27) See entire document. | 1-16 |
| A | KR 10-2022-0066232 A (ECOPRO BM CO., LTD.) 24 May 2022 (2022-05-24) See entire document. | 1-16 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 June 2024** | **26 June 2024** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/003436**

| Patent document cited in search report | | | Publication date (day/month/year) | Patent family member(s) | | | Publication date (day/month/year) |
|---|---|---|---|---|---|---|---|
| KR | 10-2022-0127242 | A | 19 September 2022 | CN | 114982015 | A | 30 August 2022 |
| | | | | EP | 4092784 | A1 | 23 November 2022 |
| | | | | JP | 2021-114406 | A | 05 August 2021 |
| | | | | JP | 6734491 | B1 | 05 August 2020 |
| | | | | US | 2023-0118425 | A1 | 20 April 2023 |
| | | | | WO | 2021-145438 | A1 | 22 July 2021 |
| KR | 10-2020-0117977 | A | 14 October 2020 | CN | 111971821 | A | 20 November 2020 |
| | | | | EP | 3920275 | A1 | 08 December 2021 |
| | | | | EP | 3920275 | A4 | 01 June 2022 |
| | | | | JP | 2020-167042 | A | 08 October 2020 |
| | | | | JP | 6650064 | B1 | 19 February 2020 |
| | | | | KR | 10-2247128 | B1 | 30 April 2021 |
| | | | | WO | 2020-202708 | A1 | 08 October 2020 |
| KR | 10-2020-0001230 | A | 06 January 2020 | CN | 112189268 | A | 05 January 2021 |
| | | | | CN | 112189268 | B | 26 April 2024 |
| | | | | EP | 3762985 | A1 | 13 January 2021 |
| | | | | KR | 10-2553570 | B1 | 10 July 2023 |
| | | | | US | 11489150 | B2 | 01 November 2022 |
| | | | | US | 2020-0006758 | A1 | 02 January 2020 |
| | | | | WO | 2020-004882 | A1 | 02 January 2020 |
| KR | 10-2021-0093173 | A | 27 July 2021 | CN | 112768680 | A | 07 May 2021 |
| | | | | CN | 112768680 | B | 23 April 2024 |
| | | | | EP | 3852170 | A1 | 21 July 2021 |
| | | | | EP | 3852170 | B1 | 26 October 2022 |
| | | | | JP | 2021-114408 | A | 05 August 2021 |
| | | | | JP | 6742547 | B1 | 19 August 2020 |
| | | | | KR | 10-2348193 | B1 | 07 January 2022 |
| | | | | US | 11296318 | B2 | 05 April 2022 |
| | | | | US | 2021-0226209 | A1 | 22 July 2021 |
| KR | 10-2022-0066232 | A | 24 May 2022 | CN | 114203981 | A | 18 March 2022 |
| | | | | EP | 3965183 | A1 | 09 March 2022 |
| | | | | JP | 2022-042478 | A | 14 March 2022 |
| | | | | JP | 2023-118940 | A | 25 August 2023 |
| | | | | JP | 7463321 | B2 | 08 April 2024 |
| | | | | KR | 10-2022-0030027 | A | 10 March 2022 |
| | | | | KR | 10-2397756 | B1 | 13 May 2022 |
| | | | | KR | 10-2511736 | B1 | 20 March 2023 |
| | | | | US | 11973212 | B2 | 30 April 2024 |
| | | | | US | 2022-0069289 | A1 | 03 March 2022 |

Form PCT/ISA/210 (patent family annex) (July 2022)